# DEMANDE DE BREVET EUROPEEN

(11) **EP 2 958 015 A1**
(43) Date de publication de la demande: **23.12.2015**
(21) Numéro de dépôt: 15172180.0
(22) Date de dépôt: 15.06.2015
(51) Int. Cl.: G06F 9/44, G06F 3/048, H04M 1/725

(54) **PROCÉDÉ D'ADAPTATION ET ADAPTATEUR D'INTERFACE UTILISATEUR**

(30) Priorité: 19.06.2014 FR 1455664
(71) Demandeur: Orange, 75015 Paris (FR)
(72) Inventeur: DOISY, Nicolas, 35000 Rennes (FR); CHAUVEL, Jérôme, 22660 Trevou Treguignec (FR)

(57) **Abrégé**

L'invention concerne l'adaptation de l'interface utilisateur à un contexte d'interaction. Un objet de l'invention est un procédé d'adaptation d'une interface utilisateur d'au moins une application mise en oeuvre par un terminal utilisateur comportant une modification d'au moins un paramètre de ladite interface utilisateur sur ledit terminal utilisateur en fonction d'un changement de contexte d'interaction de l'utilisateur avec ladite interface utilisateur, un desdits au moins un paramètre modifié étant un paramètre d'interaction. Ainsi, le mode d'interaction de l'interface s'adapte aussi au contexte d'interaction. A savoir dans notre exemple, l'utilisateur peut passer automatiquement ou manuellement d'un mode « en main » à un mode « hors main » lui permettant, par exemple, d'interagir avec son écran de plusieurs points de sa cuisine sans se déplacer vers celui-ci systématiquement.

## Description

L'invention concerne l'adaptation de l'interface utilisateur à un contexte d'interaction.

Le concepteur d'une application ou d'un site Internet sait en général peu de choses sur l'utilisateur de son application et n'a aucun moyen de le savoir : L'utilisateur consultera-t-il l'application assis à son bureau avec l'application affichée sur son écran ou dans les transports sur son téléphone ou sa tablette. Peut-être l'ordinateur lira-t-il l'application à haute voix ! En effet, une fois en ligne, l'application est à la merci de l'utilisateur ou plus particulièrement de leur terminaux : de leur police de caractère, de la couleur de l'écran, de la forme et de la taille de la fenêtre supportant l'application. Le concepteur, face à toutes ces incertitudes, à cette flexibilité, peut choisir d'établir des contraintes.

Le problème est alors qu'en raison de la large gamme de terminaux (moniteurs d'ordinateur, smartphones, tablettes, TV, etc.) permettant de consulter une application donnée, ces contraintes sont mises en défauts.

C'est pourquoi, les développeurs d'applications et de sites Web ont imaginé des interfaces flexibles en fonction du contexte d'utilisation, à savoir du terminal utilisé pour y accéder aussi nommé Responsive Design. Ainsi, l'expérience de l'application offerte à l'utilisateur est optimisée en fonction du terminal avec notamment un même confort visuel et sans avoir recours défilement horizontal ou au zoom avant/arrière sur les appareils tactiles notamment, manipulations qui dégradent considérablement l'expérience utilisateur.

Néanmoins, l'utilisateur d'une application sur un terminal donné se verra proposé une seule interface utilisateur qui n'évoluera éventuellement qu'en fonction de la taille et la forme de la fenêtre supportant l'application. Ainsi, un utilisateur d'une application tel qu'un carnet de recettes de cuisine sur une tablette se verra proposé une interface unique pour cette application sur sa tablette avec un affichage pour une lecture type livre et une interaction par le biais de l'écran tactile qu'il soit en train de chercher une recette la tablette posée sur ces genoux ou sur la table devant lui à faible distance (distance de bras environ), ou qu'il soit en train de chercher ses ingrédients et ustensiles dans ses placards ou en train d'élaborer sa recette (les mains éventuellement pleines de farines !)

Le document « Managing Context Information in Mobile Devices » de P. Korpipää et al, du 1er juillet 2003, Persuasive Computing, p. 42-51 propose une gestion des informations de contexte des dispositifs mobil es. Le but est de tenir compte d'un contexte dans une application, c'est-à-dire de rendre un service en fonction de la localisation, de l'instant, de l'environnement. Notamment, le contenu et le format de l'information reproduite sont modifiés en fonction du contexte : environnement, activité de l'utilisateur.

Un des buts de la présente invention est de remédier à des insuffisances de l'état de la technique.

Un objet de l'invention est un procédé d'adaptation d'une interface utilisateur d'au moins une application mise en oeuvre par un terminal utilisateur comportant une modification d'au moins un paramètre de ladite interface utilisateur sur ledit terminal utilisateur en fonction d'un changement de contexte d'interaction de l'utilisateur avec ladite interface utilisateur, un desdits au moins un paramètre modifié étant un paramètre d'interaction.

Ainsi, l'interface s'adapte aussi au contexte d'interaction. A savoir dans notre exemple, l'utilisateur peut passer automatiquement ou manuellement d'un mode « en main » à un mode « hors main » lui permettant, par exemple, de lire son écran de plusieurs points de sa cuisine sans se déplacer vers celui-ci systématiquement.

Et, ainsi, l'utilisateur peut passer d'une commande de l'interface par l'écran tactile par exemple à une commande vocale et/ou gestuelle à distance (kinétique).

Avantageusement, un desdits au moins un paramètre modifié est un paramètre de reproduction.

Ainsi, la taille de la police peut évoluer en fonction de l'évolution du contexte d'interaction et/ou la couleur de la police ou du fond et/ou passer d'une reproduction par affichage à une reproduction par vocalisation... pour s'adapter au moins au nouveau contexte d'interaction.

Avantageusement, ledit procédé d'adaptation comporte une détection de contexte d'interaction, ladite modification de paramètre d'interface d'utilisation étant déclenchée lorsque le contexte d'interaction détecté a changé.

Ainsi, l'interface peut s'adapter automatiquement en fonction du contexte d'interaction détecté.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un terminal utilisateur et étant conçus pour commander l'exécution des différentes étapes de ce procédé.

L'invention vise donc aussi un programme comprenant des instructions de code de programme pour l'exécution des étapes du procédé d'adaptation d'interface utilisateur lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est également un adaptateur d'interface utilisateur d'au moins une application mise en oeuvre par un terminal utilisateur comportant un modificateur d'au moins un paramètre de ladite interface utilisateur sur ledit terminal utilisateur en fonction d'un changement de contexte d'interaction de l'utilisateur avec ladite interface utilisateur, un desdits au moins un paramètre modifié étant un paramètre d'interaction.

Un objet de l'invention est aussi un terminal utilisateur comportant
- au moins un dispositif de traitement mettant en oeuvre une application
- une interface utilisateur d'au moins ledit dispositif de traitement
- un adaptateur d'interface utilisateur selon l'invention

Avantageusement, ledit terminal comporte au moins un détecteur de contexte d'interaction, ledit détecteur déclenchant ledit modificateur de paramètre d'interface d'utilisation lorsque le contexte d'interaction détecté a changé.

Avantageusement, ledit détecteur comporte un détecteur de visage d'utilisateur dudit terminal.

Ainsi, le contexte d'interaction est défini en fonction de l'éloignement de l'utilisateur et/ou la position de l'utilisateur par rapport à son terminal.

Avantageusement, ledit détecteur comporte au moins un référentiel, tel qu'un gyroscope ou un accéléromètre placé dans le détecteur ou dans un dispositif externe tel qu'un bracelet placé sur l'utilisateur.

Ainsi, le contexte d'interaction est défini en fonction de la fréquence d'interaction de l'utilisateur avec son terminal (mode « en main » et « hors main »).

Les caractéristiques et avantages de l'invention apparaîtront plus clairement à la lecture de la description, faite à titre d'exemple, et des figures s'y rapportant qui représentent :
- Figure 1, un schéma simplifié d'un procédé d'adaptation d'interface utilisateur selon l'invention,
- Figures 2a et 2b, un schéma simplifié d'un adaptateur d'interface utilisateur selon l'inventeur et un schéma simplifié de détecteur de contexte d'interaction utilisé dans un mode de réalisation particulier de l'invention,
- Figures 3a et 3b, un exemple d'usage de l'invention montrant une interface utilisateur respectivement dans un premier contexte d'interaction puis dans un deuxième contexte d'interaction lorsque le procédé d'adaptation d'interface utilisateur est mis en oeuvre,

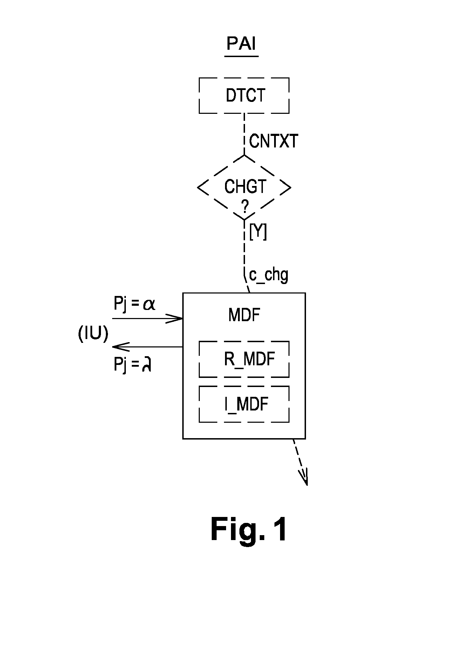

La figure 1 illustre un schéma simplifié d'un procédé d'adaptation d'interface utilisateur selon l'invention.

Le procédé d'adaptation PAI d'une interface utilisateur d'au moins une application mise en oeuvre par un terminal utilisateur comporte une modification MDF d'au moins un paramètre Pj de ladite interface utilisateur IU sur ledit terminal utilisateur en fonction d'un changement *c*_*chg* de contexte d'interaction de l'utilisateur avec ladite interface utilisateur. L'interface IU s'adapte alors au contexte d'interaction CNTXT.

En particulier, la modification d'un paramètre MDF comporte une lecture (non illustrée) des paramètres courants Pj = α de l'interface utilisateur de l'application en cours d'utilisation puis une écriture (non illustrée), en lieu et place d'un ou plusieurs paramètres lus, des paramètres modifiés Pj = λ en fonction du changement de contexte *c*_*chg*.

En particulier, un desdits au moins un paramètre modifié Pj est un paramètre de reproduction PRj. Par exemple, la modification de paramètres MDF comporte une modification de paramètre de reproduction R_MDF qui permet de modifier au moins un paramètre de reproduction de l'interface utilisateur en fonction du changement de contexte *c*_*chg*.

En particulier, un desdits au moins un paramètre modifié Pk est un paramètre d'interaction Plk. Par exemple, la modification de paramètres MDF comporte une modification de paramètre d'interaction I_MDF qui permet de modifier au moins un paramètre d'interaction de l'interface utilisateur en fonction du changement de contexte *c*_*chg*.

En particulier, le procédé d'adaptation PAI comporte une détection de contexte d'interaction DTCT.

La modification MDF de paramètre d'interface d'utilisation est, notamment, déclenchée :
- Soit par l'utilisateur au moyen de ladite interface utilisateur : l'interface utilisateur IU envoie alors une commande de modification à la modification MDF. La commande comporte notamment une information concernant le nouveau contexte d'interaction.
- Soit par la détection de contexte directement qui transmet le contexte CNTXT à la modification qui en tient compte pour éventuellement modifier un ou plusieurs paramètres de l'interface ou indirectement après vérification d'un changement de contexte CHGT ? : ainsi, la modification MDF est déclenchée uniquement lorsque le contexte d'interaction détecté a changé CHGT ? = [Y].

La modification MDF déclenchée par l'utilisateur permet à l'utilisateur d'adapter l'interface à un souhait d'utilisation.

La modification MDF déclenchée directement ou indirectement par une détection de contexte DTCT permet d'automatiser l'adaptation de 'l'interface ce qui facilite l'utilisation de l'application par l'utilisateur dans certains cas d'usage comportant notamment des adaptations répétées ou systématiques de l'interface.

La modification MDF déclenchée dans le cas d'un changement de contexte d'interaction CHGT ? = [Y] permet de limiter la sollicitation de la modification de paramètre voire de la lecture des paramètres de l'interface.

Dans un mode de réalisation particulier de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un terminal utilisateur et étant conçus pour commander l'exécution des différentes étapes de ce procédé.

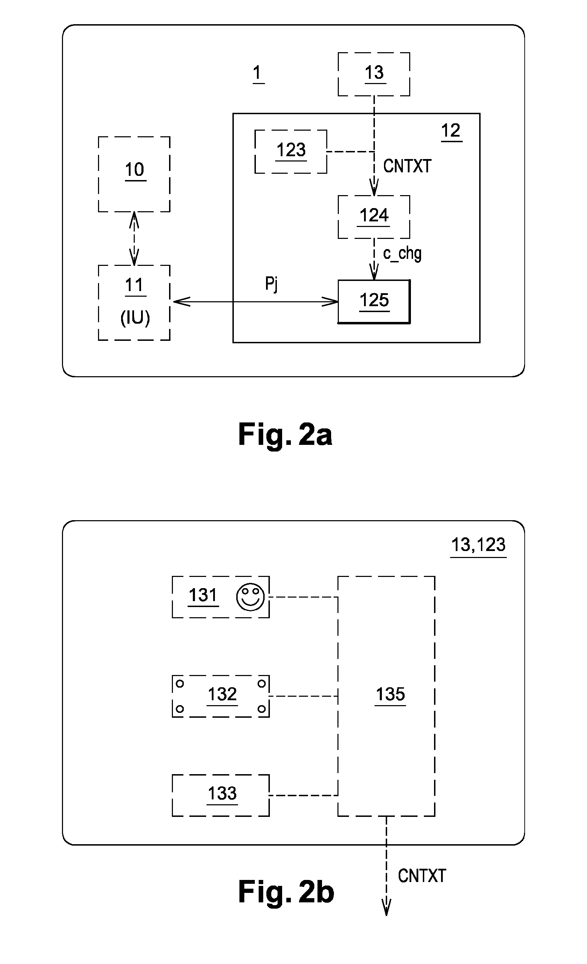

La figure 2a illustre un schéma simplifié d'un adaptateur d'interface utilisateur selon l'inventeur.

L'adaptateur 12 d'interface utilisateur d'au moins une application mise en oeuvre par un terminal utilisateur 1 comporte un modificateur 125 d'au moins un paramètre Pj de ladite interface utilisateur 11 (IU) sur ledit terminal utilisateur 1 en fonction d'un changement de contexte d'interaction *c_chg* de l'utilisateur avec ladite interface utilisateur.

Le terminal utilisateur 1 illustré par la figure 2a comporte
- un dispositif de traitement 10 mettant en oeuvre une application
- une interface utilisateur 11 d'au moins ledit dispositif de traitement 10
- un adaptateur d'interface utilisateur 12 selon l'invention.

En particulier, le terminal 1 comporte au moins un détecteur de contexte d'interaction 13 ou 123. Au moins un détecteur est présent soit directement dans le terminal 1 (détecteur 13) et/ou un dispositif quelconque du terminal 1 (non illustré) et/ou dans l'adaptateur d'interface 12 du terminal 1 (détecteur 123). Le détecteur 13, 123 déclenche directement ou indirectement le modificateur 125 de paramètre d'interface d'utilisation.

En particulier, l'adaptateur 12 comporte un vérificateur de changement de contexte 124 connecté auxdits détecteurs 13, 123. Ainsi, lorsque le contexte d'interaction détecté a changé, ledit vérificateur 124 déclenche le modificateur 125 de paramètre d'interface d'utilisation en lui fournissant le nouveau contexte c_nv (non illustré) et/ou le changement de contexte c_chg.

La figure 2b illustre un schéma simplifié de détecteur de contexte d'interaction utilisé dans un mode de réalisation particulier de l'invention.

En particulier, le détecteur 13, 123 comporte un détecteur de visage 131 d'utilisateur dudit terminal.

En particulier, ledit détecteur 13, 123 comporte au moins un référentiel, tel qu'un gyroscope ou un accéléromètre (notamment les accéléromètres présents dans le système de navigation ou un autre dispositif du terminal 1, ou un ou plusieurs accéléromètres placés dans le détecteur ou dans un dispositif externe tel qu'un bracelet placé sur l'utilisateur...).

En particulier, ledit détecteur 13, 123 comporte au moins un autre type de détecteur 133 (autre que détecteur de visage 131, accéléromètre 132).

Lorsque ledit détecteur 13 comporte plusieurs types de détecteurs fournissant des informations de contexte ou reçoit (non illustré) des informations de contexte de plusieurs type de détecteur, le détecteur 13 comporte un analyseur apte à déterminer en fonction d'une ou plusieurs informations de contexte fournie(s) le contexte d'interaction courant CNTXT.

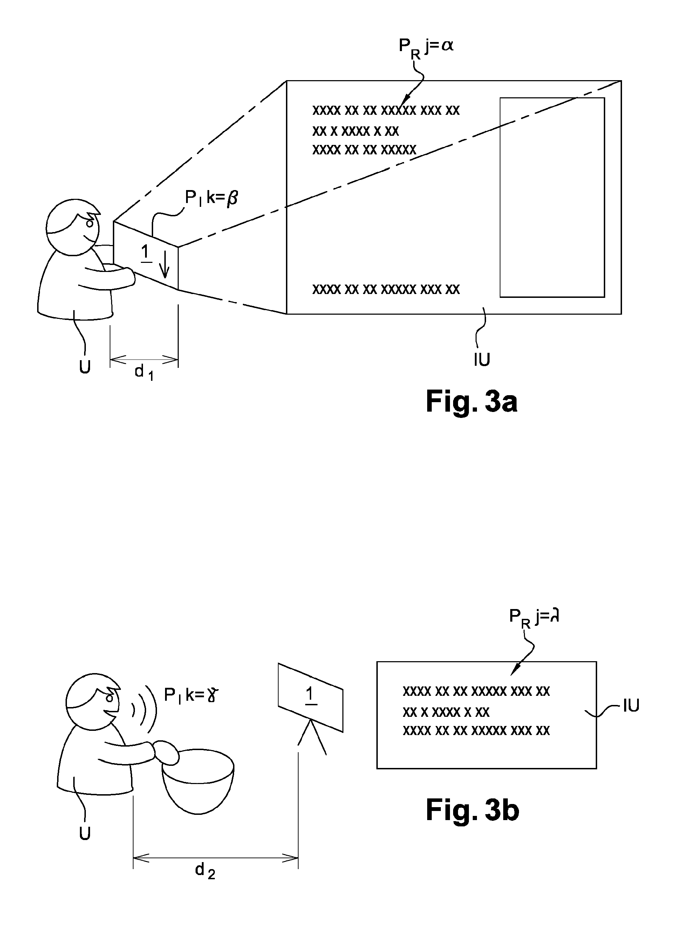

Les figures 3a et 3b illustrent un exemple d'usage de l'invention montrant une interface utilisateur respectivement dans un premier contexte d'interaction puis dans un deuxième contexte d'interaction lorsque le procédé d'adaptation d'interface utilisateur est mis en oeuvre,

Prenons l'exemple d'une application sur la nutrition.

Dans un premier temps, comme le montre la figure 3a, l'utilisateur U recherche, éventuellement, une recette de cuisine sur cette application au moyen de son terminal 1. Dans ce contexte l'utilisateur U se trouve à une distance de lecture d1 égale à une distance de bras, voire, lorsque le terminal 1 est une tablette tactile, l'utilisateur U tient le terminal 1 dans ses mains.

L'interface IU présente alors, par exemple, une image du plat cuisine et la liste des ingrédients et la recette par exemple dans une police d'une taille adapté à la lecture d'un écran à distance de lecture d₁ équivalent à une lecture de près (c'est-à-dire à distance de bras). La valeur de taille de police α constitue la valeur du paramètre de reproduction PRj correspondant à la taille de police.

En outre, si la recette nécessite plus d'un écran pour son affichage, l'utilisateur peut lire la suite de la recette en faisant défiler la recette sur son interface utilisateur IU par interaction manuelle directement ou indirectement avec son terminal 1 (défilement tactile pour une tablette tactile, défilement par actionnement de boutons « monter de page »/ « descente de page » d'un clavier virtuel du terminal 1 ou d'un clavier physique connecté au terminal 1, défilement par manipulation d'un ascenseur de l'interface utilisateur IU soit de manière tactile soit au moyen d'une souris connectée au terminal 1).

Ainsi, l'interface utilisateur IU est adaptée en lecture et en interaction avec le contexte d'utilisation « en main » ou « à portée de main ».

Dans un deuxième temps, l'utilisateur U passe à l'élaboration de son plat. Pour cela, il pose son terminal 1 sur une partie de son plan de travail ou celui-ci ne sera pas sali lorsqu'il cuisine. L'inconvénient est que l'utilisateur U cuisinant, il ne pourra plus manipuler son terminal 1 et, en outre, le mode de reproduction en cours l'obligera à faire des allers-retours entre son écran et son appareil pour suivre la recette.

L'invention permet soit à l'utilisateur à passer dans un mode « hors main », soit de détecter le changement de contexte par exemple par l'éloignement de l'utilisateur de son écran (taille de visage diminuant par exemple), réduction de la fréquence d'interaction manuelle, détection par un référentiel d'une stabilité du terminal... Ainsi, le procédé d'adaptation selon l'invention pourra modifier un ou plusieurs paramètres de l'interface utilisateur pour s'adapter à ce nouveau contexte.

L'interface IU passe alors, par exemple, à une reproduction de la recette avec une police d'une taille adapté à la lecture d'un écran à distance de lecture d₂ équivalent à la longueur moyenne d'un plan de travail (par exemple). La valeur de taille de police λ constitue la valeur du paramètre de reproduction PRj correspondant à la taille de police.

En outre, si la recette nécessite plus d'un écran pour son affichage, l'utilisateur peut lire la suite de la recette en faisant défiler la recette sur son interface utilisateur IU par un mode d'interaction directement ou indirectement avec son terminal 1 autre que l'interaction manuelle : par exemple interaction vocale ou gestuelle...

Ainsi, l'interface utilisateur IU est adaptée en lecture et en interaction avec le contexte d'utilisation « hors main».

Comme le montre cet exemple, l'utilisateur peut passer automatiquement ou manuellement d'un mode « en main » à un mode « hors main » lui permettant, par exemple, de lire son écran de plusieurs points de sa cuisine sans se déplacer vers celui-ci systématiquement.

Comme le montre notre exemple, la taille de la police peut évoluer en fonction de l'évolution du contexte d'interaction et/ou aussi la couleur de la police ou du fond et/ou aussi passer d'une reproduction par affichage à une reproduction par vocalisation... pour s'adapter au moins au nouveau contexte d'interaction.

Comme le montre la figure 3b, l'utilisateur peut passer d'une commande de l'interface par l'écran tactile par exemple à une commande vocale Plk = γ et/ou gestuelle à distance (kinésique).

Ainsi, l'interface peut s'adapter automatiquement en fonction du contexte d'interaction détecté. Le contexte d'interaction est, notamment, défini en fonction de l'éloignement de l'utilisateur et/ou la position de l'utilisateur par rapport à son terminal ou en fonction de la fréquence d'interaction de l'utilisateur avec son terminal (mode « en main » et « hors main »).

Dans un mode de réalisation de l'invention, le procédé d'adaptation comporte une base de données de règles d'interactions dans laquelle à un contexte d'interaction est associé un mode d'interaction comportant les valeurs d'un ou plusieurs paramètres de l'interface utilisateur, et/ou un traitement permettant de déterminer, en fonction des valeurs des paramètres de l'interface utilisateur en cours et/ou de valeurs de changement de contexte (évolution de distance...), les valeurs pour la modification d'un ou plusieurs paramètres de l'interface utilisateur.

Une ou plusieurs règles peuvent être communes à toutes ou certaines des applications mises en oeuvre par le terminal 1, ou spécifique à une application. Par exemple, le « mode en main » commun à plusieurs applications comporte des paramètres d'interaction manuel et des paramètres de reproduction permettant une lecture à distance de bras. Autre exemple, un mode « hors main recette » pour une application de nutrition peut être distinct d'un mode « hors main TV » pour une application de VOD (vidéo à la demande). Par exemple, le mode « hors main recette » comporte des paramètres d'interactions non manuelles, alors que le mode « hors main TV » comporte des commandes manuelles réduisant les commandes d'interactions à celle d'une télécommande (changement de chaine, volume, contraste, et commande de lecture/pause/arrêt). Pour revenir à une lecture du catalogue et à une sélection de vidéo, l'utilisateur doit repasser en mode « en main » (détecter par exemple par la position du visage par rapport au terminal, en face du terminal « pour en main » et à côté du terminal pour « hors main »). Dans le cas de l'application VOD, il peut être envisagé un autre mode « mode visionnage » pour lequel le terminal 1 est placé à distance de l'utilisateur permettant le visionnage de la vidéo par une ou plusieurs personnes. Dans ce mode, les paramètres d'interaction et/ou de reproduction sont modifiés pour tenir compte du fait que l'utilisateur ne peut pas interagir manuellement, permettant des commandes d'interaction de type télécommande par commandes vocales et/ou la reproduction d'une interface de type télécommande sur l'écran du terminal 1 pour une commande gestuelle par exemple.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Procédé d'adaptation d'une interface utilisateur d'au moins une application mise en oeuvre par un terminal utilisateur comportant une modification d'au moins un paramètre de ladite interface utilisateur sur ledit terminal utilisateur en fonction d'un changement de contexte d'interaction de l'utilisateur avec ladite interface utilisateur, un desdits au moins un paramètre modifié étant un paramètre d'interaction.

2. Procédé d'adaptation selon la revendication précédente **caractérisé en ce qu'**un desdits au moins un paramètre modifié est un paramètre de reproduction.

3. Procédé d'adaptation selon l'une quelconque des revendications précédentes **caractérisé en ce que** ledit procédé d'adaptation comporte une détection de contexte d'interaction, ladite modification de paramètre d'interface d'utilisation étant déclenchée lorsque le contexte d'interaction détecté a changé.

4. Programme comprenant des instructions de code de programme pour l'exécution des étapes du procédé d'adaptation selon l'une quelconque des revendications précédentes lorsque ledit programme est exécuté par un processeur.

5. Adaptateur d'interface utilisateur d'au moins une application mise en oeuvre par un terminal utilisateur comportant un modificateur d'au moins un paramètre de ladite interface utilisateur sur ledit terminal utilisateur en fonction d'un changement de contexte d'interaction de l'utilisateur avec ladite interface utilisateur, un desdits au moins un paramètre modifié étant un paramètre d'interaction.

6. Terminal utilisateur comportant
• au moins un dispositif de traitement mettant en oeuvre une application
• une interface utilisateur d'au moins ledit dispositif de traitement
• un adaptateur d'interface utilisateur selon la revendication précédente

7. Terminal utilisateur selon la revendication précédente **caractérisé en ce que** ledit terminal comporte au moins un détecteur de contexte d'interaction, ledit détecteur déclenchant ledit modificateur de paramètre d'interface d'utilisation lorsque le contexte d'interaction détecté a changé.

8. Terminal utilisateur selon la revendication précédente **caractérisé en ce que** ledit détecteur comporte un détecteur de visage d'utilisateur dudit terminal.

9. Terminal utilisateur selon l'une quelconque des revendications 8 ou 9 **caractérisé en ce que** ledit détecteur comporte au moins un référentiel.
